# EUROPEAN PATENT SPECIFICATION

(11) **EP 3 778 183 B1**
(45) Date of publication and mention of the grant of the patent: **01.06.2022**
(21) Application number: 19777159.5
(22) Date of filing: 25.03.2019
(51) Int. Cl.: B29C 45/66, B29C 45/76, G05D 15/01

(54) **INJECTION MOLDING MACHINE**
SPRITZGIESSMASCHINE
MACHINE DE MOULAGE PAR INJECTION

(30) Priority: 30.03.2018 JP 2018069665
(43) Date of publication of application: 17.02.2021
(73) Proprietor: Sumitomo Heavy Industries, Ltd., Tokyo 141-6025 (JP)
(72) Inventor: MORITA, Hiroshi, Chiba-shi, Chiba 263-0001 (JP); HOTTA, Daigo, Chiba-shi, Chiba 263-0001 (JP)
(74) Representative: Walcher, Armin
(86) International application number: PCT/JP2019/012561
(87) International publication number: WO 2019/189011

(56) References cited:
- WO-A1-2017/164423
- JP-A- H04 241 911
- JP-A- 2010 099 847
- JP-A- 2010 105 410
- JP-A- 2010 137 542
- JP-A- 2010 274 661

## Description

### Technical Field

The present invention relates to an injection molding machine.

### Background Art

In an injection molding machine, a resin which is heated in a plasticizing cylinder to be melted is injected into a cavity space of a mold unit to fill the cavity space. The resin with which the cavity space is filled is cooled and solidified to be a molding product.

The mold unit has a stationary mold and a movable mold, and the movable mold is moved forward and rearward with respect to the stationary mold by the mold clamping unit to perform mold closing, pressurization, mold clamping, depressurization, and mold opening. The mold clamping unit includes a stationary platen to which the stationary mold is attached, a movable platen to which the movable mold is attached, and a toggle mechanism which is a moving mechanism for moving the movable platen forward or rearward. The toggle mechanism also includes a crosshead and a toggle link and is disposed between the movable platen and a toggle support.

The toggle mechanism moves the crosshead so as to move the movable platen forward and generates a mold clamping force which is set by not only bring the movable mold into contact with (mold closing) the stationary mold but also further pressing (mold clamping) the movable mold after the contact. A position of the toggle support is adjusted so that a predetermined mold clamping force is obtained by the toggle mechanism.

In the mold clamping unit, a technology is known, which move the toggle support to perform correction/control the mold clamping force so that the mold clamping force detected by a mold clamping force sensor is close to a set mold clamping force, and shortens a correction/control time of the mold clamping force when the mold is attached (for example, refer to PTL 1).

### Citation List

### Patent Literature

[PTL 1] Japanese Unexamined Patent Publication No. 2010-274661, see also EP 1 859 914 A1, a family member publication.

### Summary of Invention

### Technical Problem

Then, in correction/control of a mold clamping force, a controller compares a detection value of the mold clamping force detected by a mold clamping force sensor with a set value of the mold clamping force, and outputs a command based on a comparison result. Since the correction/control of the mold clamping force is performed based on a detection value (actual value) of the mold clamping force acquired only when a mold is clamped, a high response is not required.

Meanwhile, in order to generate the mold clamping force according to the command, a positioning control of a toggle support by a mold space adjustment motor is executed. In addition, the crosshead positioning control is performed by the mold clamping motor. A high response is required for positioning control by the motors.

In the technique of PTL 1 or the like, the correction/control of the mold clamping force and the positioning control of the motor are performed in the same control cycle, and thus, a processing load by the controller may increase.

The present invention is made in consideration of the above-described problems, and an obj ect of the present invention is to suppress a processing load of a controller in an injection molding machine.

### Solution to Problem

The aforementioned problem is solved by an injection molding machine according to claim 1.

An injection molding machine according to an aspect of an embodiment includes a drive unit which moves a movable unit and a controller which controls the drive unit, in which the controller performs a drive control of the drive unit and a monitoring control, and a control cycle of the monitoring control is longer than a control cycle of the drive control. Advantageous Effects of Invention

According to the aspect of the embodiment, in the injection molding machine, it is possible to suppress a processing load of the controller.

### Brief Description of Drawings

Fig. 1 is a side view showing a state when a mold opening of an injection molding machine according to a first embodiment is completed.
Fig. 2 is a side view showing a state when a mold of the injection molding machine according to the first embodiment is clamped.
Fig. 3 is a view showing correction/control of a mold clamping force by position correction of a toggle support.
Fig. 4 is a functional block diagram showing components of a controller according to the first embodiment.
Fig. 5 is a flowchart showing processing for performing the correction/control of the mold clamping force according to the first embodiment.
Fig. 6 is a flowchart showing processing for performing correction/control on the mold clamping force in a case where the first prohibition unit and the second prohibition unit are used according to the first embodiment.
Fig. 7 is a diagram showing a multiplexer which receives a detection signal according to the first embodiment.
Fig. 8 is a functional block diagram showing components of a controller according to a second embodiment.
Fig. 9 is a flowchart showing processing for performing correction/control on a mold clamping force according to the second embodiment.
Fig. 10 is a diagram showing an example of a section in which various controls are performed in a series of processes of an injection molding machine and a control cycle thereof.
Fig. 11 is a diagram showing another example of the section in which various controls are performed in a series of processes of the injection molding machine and the control cycle thereof.

### Description of embodiments

Hereinafter, embodiments of the present invention are described with reference to the drawings. In each drawing, the same or corresponding reference numerals are assigned to the same or corresponding configurations, and descriptions thereof are omitted.

### [First Embodiment]

### (Injection Molding Machine)

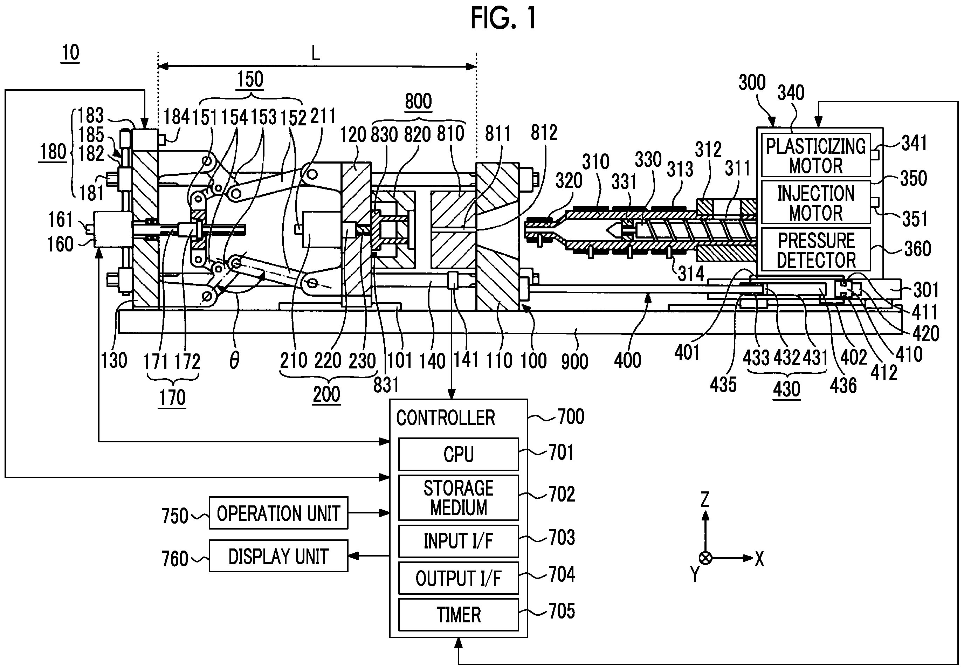

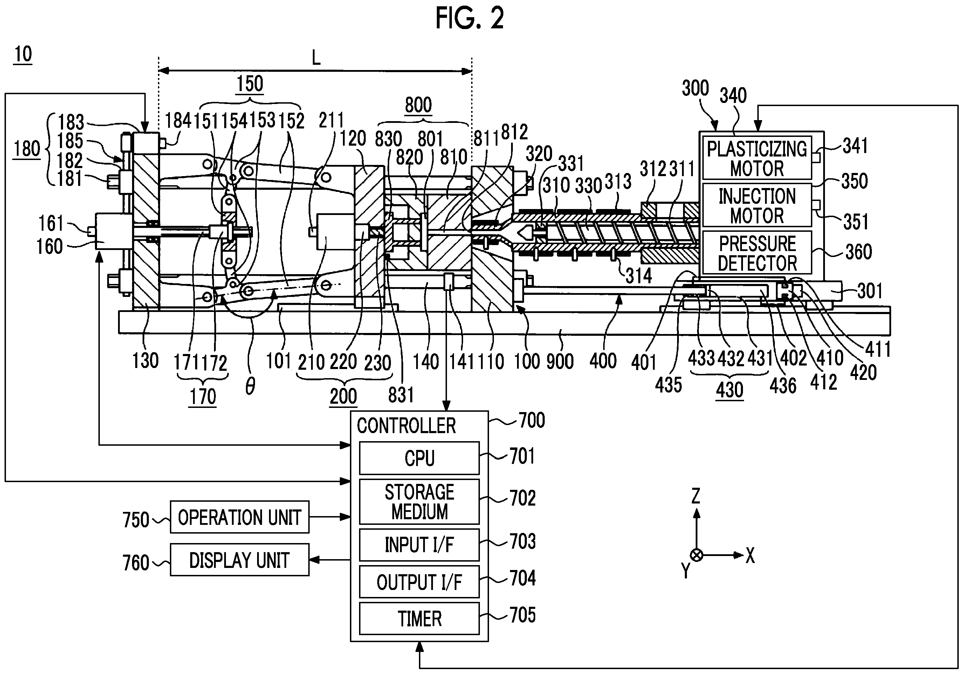

Fig. 1 is a view showing a state when a mold opening of an injection molding machine according to an embodiment is completed. Fig. 2 is a view showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. A negative side in the Y direction is referred to as an operation side, and a positive side in the Y direction is referred to as a counter operation side. As shown in Figs. 1 and 2, the injection molding machine 10 includes the mold clamping unit 100, an ejector unit 200, an injection unit 300, a moving unit 400, a controller 700, and a frame 900. Hereinafter, each component of the injection molding machine 10 will be described.

### (Mold Clamping Unit)

In descriptions of the mold clamping unit 100, a movement direction (for example, X positive direction) of a movable platen 120 when a mold is closed is defined as a front side, and a movement direction (for example, X negative direction) of the movable platen 120 when the mold is opened is defined as a rear side.

The mold clamping unit 100 performs mold closing, pressurization, mold clamping, depressurization, and mold opening of a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, the mold closing, the pressurization, the mold clamping, the depressurization, and the mold opening are performed. The mold unit 800 includes the stationary mold 810 and the movable mold 820.

The toggle support 130 is disposed so as to be separated from the stationary platen 110, and is placed on the frame 900 to be movable in mold opening and closing directions. In addition, the toggle support 130 may be movably disposed along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movably disposed in the mold opening and closing directions with respect to the frame 900. However, the toggle support 130 may be fixed to the frame 900, and the stationary platen 110 may be movably disposed in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The plurality of tie bars 140 are disposed to be parallel in the mold opening and closing directions and extend according to a mold clamping force . A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

Here, a drive control of the mold clamping motor refers to a feedback control of the mold clamping motor which causes a deviation between the detection value of the position of the crosshead 151 by the crosshead position detector and a predetermined set value to be zero.

A monitoring control of the mold clamping force refers to at least one of acquiring the detection value of the mold clamping force by the tie bar strain detector 141, or/and comparing the detection value of the mold clamping force by the tie bar strain detector 141 with a predetermined set value.

In the pressurization process, the mold clamping motor 160 is further driven to further move the crosshead 151 forward from the mold closing completion position to a mold clamping position, and thus, a mold clamping force is generated. In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other. In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are arranged in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed so that a predetermined mold clamping force when the mold is clamped is obtained. For example, in the mold space adjustment, the gap L between the stationary platen 110 and the toggle support 130 is adjusted so that the link angle θ of the toggle mechanism 150 at the time of a mold touch when the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. Accordingly, the position of the toggle support 130 with respect to the tie bar 140 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

Here, a drive control of the mold space adjustment motor refers to a feedback control of a mold space adjustment motor which causes a deviation between the detection value of the position of the toggle support 130 by the toggle support position detector and a predetermined set value to be zero.

The mold space adjustment mechanism 180 rotates one of the screw shaft 181 and the screw nut 182 which are screwed to each other to adjust the gap L. A plurality of mold space adjustment mechanisms 180 may be used, and a plurality of mold space adjustment motor 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X positive direction) of the movable platen 120 when the mold is closed is defined as the front side, and the movement direction (for example, X negative direction) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set movement speed, and thus, the movable member 830 moves forward and the molding product is ejected. Thereafter, the ejector motor 210 is driven to move the ejector rod 230 rearward at a set movement speed, and thus, the movable member 830 moves rearward to an original standby position. For example, a position or movement speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod movement speed detector which detects the movement speed of the ejector rod 230 are not limited to the ejector motor encoder 211, and a general detector can be used.

Further, a proximity sensor 831 used for a position monitoring control of the movable member 830 is disposed near the standby position of the movable member 830. The position monitoring control of the movable member 830 will be described in detail separately.

### (Injection Unit)

Unlike the descriptions of the mold clamping unit 100 or the descriptions of the ejector unit 200, in descriptions of the injection unit 300, a movement direction (for example, X negative direction) of a screw 330 during filling is referred to as a front side, and a movement direction (for example, X positive direction) of the screw 330 during plasticizing is referred to as a rear side.

The injection unit 300 is installed on a slide base 301, and the slide base 301 is disposed so as to be movable forward or rearward with respect to the frame 900. The injection unit 300 is disposed to be movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed on a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 so that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are arranged in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also referred to as an "injection start position"), a movement speed switching position, and a V/P switching position are set. These positions are arranged in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a setting pressure or less, the screw 330 moves forward at the set movement speed. Meanwhile, in a case where the detection value of the pressure detector 360 exceeds the setting pressure, in order to protect the mold, the screw 330 moves forward at a movement speed slower than the set movement speed so that the detection value of the pressure detector 360 is the setting pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. It is possible to replenish insufficient molding materials caused by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the molten molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the plasticizing cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X negative direction) of the screw 330 during filling is referred to as a front side, and the movement direction (X positive direction) of the screw 330 during plasticizing is referred to as a rear side.

The moving unit 400 moves the injection unit 300 rearward with respect to the mold unit 800.

In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flowpath 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, an output interface 704, and a timer 705. The controller 700 performs various controls by causing the CPU 701 to execute a program stored in the storage medium 702. In addition, the controller 700 receives a signal from the outside through the input interface 703 and transmits a signal to the outside through the output interface 704.

The timer 705 is an electric circuit or the like which measures an elapsed time. The timer 705 starts a counting operation which counts at predetermined time intervals in response to a command from the CPU 701 or the like, and outputs an elapsed time from a start time of the counting operation, the number of counts, or the like in response to a request. Further, the timer 705 stops the counting operation in response to a command from the CPU 701 or the like. The output of the timer 705 is used for a monitoring control of a mold closing time or a monitoring control of a plasticizing time, which will be described in detail separately.

The time interval for counting in the counting operation of the timer 705 can be appropriately changed. However, as the time interval increases, counting processing of the timer 705 can be reduced, and a processing load of the controller 700 can be reduced. Therefore, it is preferable to make the counting time interval as long as possible within a control cycle of the monitoring control.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the completion of the ejection process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process. In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the mold closing process. Moreover, the ejection process may be performed the mold opening process. In a case where an on-off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 or a display unit 760.

The operation unit 750 receives an input operation from a user and outputs a signal corresponding to the input operation to the controller 700. The display unit 760 displays a display screen corresponding to the input operation of the operation unit 750 under the control of the controller 700.

The display screen is used for the setting of the injection molding machine 10 or the like. A plurality of display screens are provided, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided. The operation unit 750 and the display unit 760 are disposed on the negative side in the Y direction of the mold clamping unit 100 (more specifically, the stationary platen 110). A negative side in the Y direction is referred to as an operation side, and a positive side in the Y direction is referred to as a counter operation side.

### (Correction/control of Mold Clamping Force)

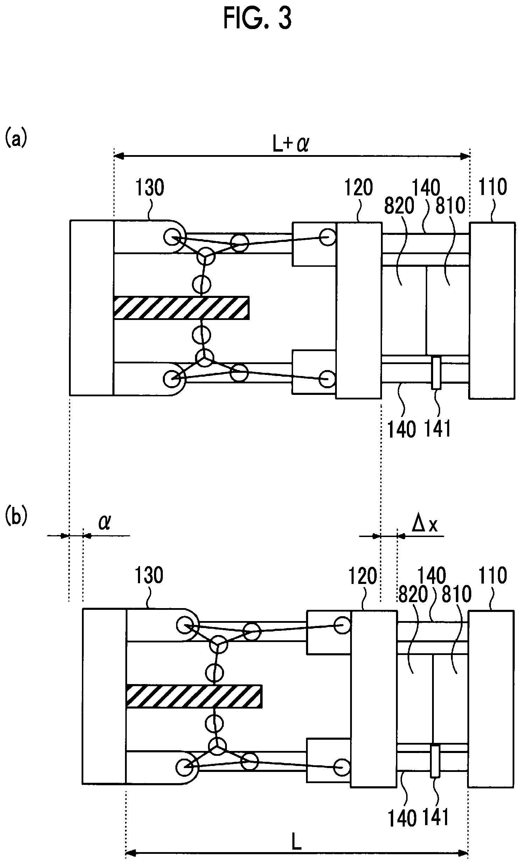

Fig. 3 is a diagram showing correction/ control of the mold clamping force by a position correction of the toggle support 130.

In Fig. 3, (a) shows a case where the space of the mold unit 800 is changed by Δx due to replacement of the mold unit 800, a temperature change of the mold unit 800, or the like, and (b) show a state before the space of the mold unit 800 is changed. Even if the space of the mold unit 800 increases, as in (b), when a gap between the stationary platen 110 and the toggle support 130 remains the same as the gap L, a mold clamping force larger than the set mold clamping force is generated. Therefore, as shown in (a), the gap between the stationary platen 110 and the toggle support 130 is changed according to the change in the space of the mold unit 800, and thus, the set mold clamping force is obtained.

In the correction/ control of the mold clamping force, the control for driving the mold space adjustment motor 183 and correcting the position of the toggle support 130 is performed in this way.

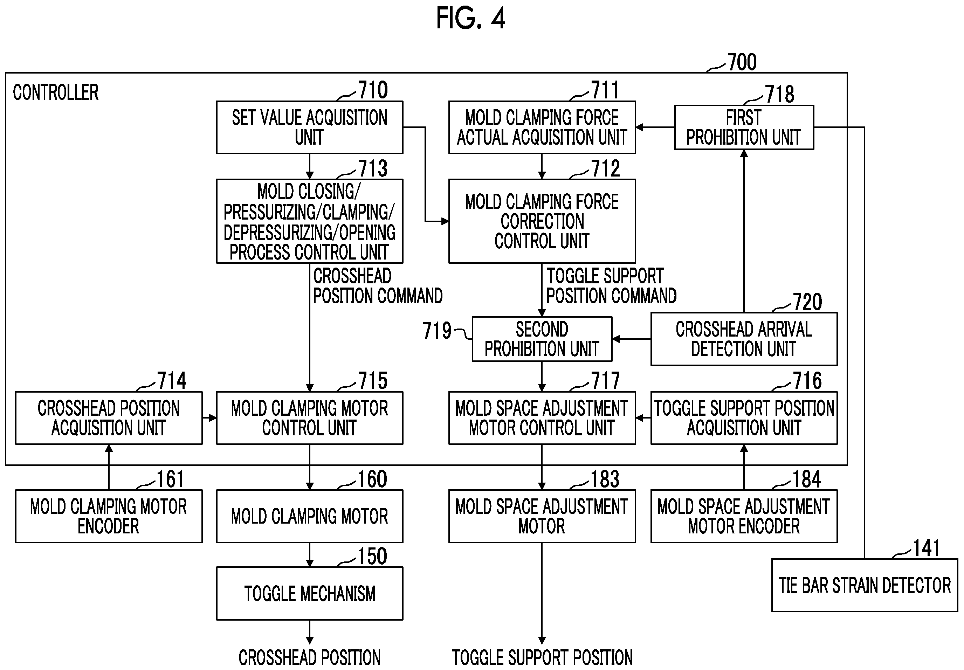

Fig. 4 is a functional block diagram showing components of the controller according to the present embodiment. Moreover, each functional block shown in Fig. 4 is conceptual and does not necessarily need to be physically configured as shown. It is possible to configure all or some of the functional blocks by functionally or physically dispersing and integrating in any unit. All or some of processing functions performed in the functional blocks can be realized by a program executed by the CPU 701 or can be realized as hardware by wired logic.

The controller 700 includes a set value acquisition unit 710, a mold clamping force actual acquisition unit 711, a mold clamping force correction control unit 712, a mold closing/pressurizing/clamping/depressurizing/opening process control unit 713, and a crosshead position acquisition unit 714. Moreover, the controller 700 includes a mold clamping motor control unit 715, a toggle support position acquisition unit 716, a mold space adjustment motor control unit 717, a first prohibition unit 718, a second prohibition unit 719, and a crosshead arrival detection unit 720.

The set value acquisition unit 710 acquires set values of a series of setting conditions in the mold closing process, the pressurization process, the mold clamping process, the depressurization process, and the mold opening process, and outputs the set values to the mold closing/pressurizing/clamping/depressurizing/opening process control unit 713. Further, the set value acquisition unit 710 outputs the set value of the mold clamping force of the series of setting conditions to the mold clamping force correction control unit 712.

The mold clamping force actual acquisition unit 711 is electrically connected to the tie bar strain detector 141. Based on the detection signal input from the tie bar strain detector 141, the mold clamping force actual acquisition unit 711 acquires the detection value of the mold clamping force as an actual value of the mold clamping force value and outputs the actual value to the mold clamping force correction control unit 712. The tie bar strain detector 141 is a typical example of a "mold clamping force sensor" described in Claims.

The mold clamping force correction control unit 712 compares an actual value of the mold clamping force input from the mold clamping force actual acquisition unit 711 with a set value of the mold clamping force input from the set value acquisition unit 710. A toggle support position command is output to the mold space adjustment motor control unit 717 according to the comparison result, and the toggle support 130 is moved to a position where a predetermined mold clamping force when the mold is clamped can be obtained.

The toggle support position command is a command for driving the mold space adjustment motor 183 to move the toggle support 130 forward or rearward to a predetermined position. The control executed by the mold clamping force correction control unit 712 is a typical example of a "control of mold clamping force correction" described in Claims.

The mold closing/pressurizing/clamping/depressurizing/opening process control unit 713 outputs a crosshead position command to the mold clamping motor control unit 715 according to the input set value in the mold closing process, the pressurization process, the mold clamping process, the depressurization process, and the mold opening process.

The crosshead position command is a command for driving the mold clamping motor 160 to move the crosshead 151 forward and rearward to a predetermined position.

The crosshead position acquisition unit 714 is electrically connected to the mold clamping motor encoder 161. The crosshead position acquisition unit 714 acquires the position of the crosshead 151 based on the detection signal input from the mold clamping motor encoder 161 and outputs the position to the mold clamping motor control unit 715.

The mold clamping motor control unit 715 is electrically connected to the mold clamping motor 160. The mold clamping motor control unit 715 drives the mold clamping motor 160 according to the input crosshead position command, and moves the crosshead 151 forward or rearward via the toggle mechanism 150.

Further, the mold clamping motor control unit 715 compares the position of the crosshead 151 input from the crosshead position acquisition unit 714 with the position indicated by the crosshead position command input from the mold clamping force correction control unit 712, drives the mold clamping motor 160 according to the comparison result, and moves the crosshead 151 forward or rearward via the toggle mechanism 150.

The control executed by the mold clamping motor control unit 715 is a typical example of a "control of the mold clamping force by the mold clamping motor" described in Claims.

The toggle support position acquisition unit 716 is electrically connected to the mold space adjustment motor encoder 184. The toggle support position acquisition unit 716 acquires the position of the toggle support 130 based on the detection signal input from the mold space adjustment motor encoder 184, and outputs the position to the mold space adjustment motor control unit 717.

The mold space adjustment motor control unit 717 is electrically connected to the mold space adjustment motor 183. The mold space adjustment motor control unit 717 drives the mold space adjustment motor 183 according to the input toggle support position command, and moves the toggle support 130 forward or rearward.

Further, the mold space adjustment motor control unit 717 compares the position of the toggle support 130 input from the toggle support position acquisition unit 716 with the position indicated by the toggle support position command input from the mold clamping force correction control unit 712, drives the mold space adjustment motor 183 according to the comparison result, and moves the toggle support 130 forward or rearward.

The control executed by the mold space adjustment motor control unit 717 is a typical example of a "control of the mold clamping force correction by the mold space adjustment motor" and a "control of the mold clamping force by the mold space adjustment motor" described in Claims.

The first prohibition unit 718, the second prohibition unit 719, and the crosshead arrival detection unit 720 will be described in detail separately.

Here, in the present embodiment, the control cycle of the "monitoring control of the mold clamping force" is longer than the control cycle of the "drive control of mold clamping motor". Further, the control cycle of the "monitoring control of the mold clamping force" is longer than the control cycle of the "drive control of the mold space adjustment motor".

The control cycle of the "monitoring control of the mold clamping force" refers to a cycle when at least one of acquiring the detection value of the mold clamping force by the tie bar strain detector 141, or/and to compare the detection value of the mold clamping force by the tie bar strain detector 141 with a predetermined set value is performed.

Further, the control cycle of the "drive control of the mold clamping motor" refers to a cycle when at least one of acquiring the detection value of the position of the crosshead 151 by the crosshead position detector, or/and comparing the detection value of the position of the crosshead 151 by the crosshead position detector with a predetermined set value is performed.

Further, the control cycle of the "drive control of the mold space adjustment motor" refers to a cycle when at least one of acquiring the detection value of the position of the toggle support 130 by the toggle support position detector, or/and comparing the detection value of the position of the toggle support 130 by the toggle support position detector with a predetermined set value is performed.

For example, the mold clamping force correction control unit 712 inputs a detection signal of the tie bar strain detector 141 indicating the mold clamping force every second. The toggle support position command is output to the mold space adjustment motor control unit 717 according to the detection signal.

For example, the mold clamping motor control unit 715 inputs a detection signal indicating the position of the crosshead 151 every 0.1 seconds. The mold clamping motor 160 and the toggle mechanism 150 are driven according to the detection signal to position and control the crosshead 151. Further, the mold space adjustment motor control unit 717 inputs a detection signal indicating the position of the toggle support 130 every 0.1 seconds. The mold space adjustment motor 183 is driven according to the detection signal to position and control the toggle support 130.

In other words, the "monitoring control of the mold clamping force" is a low priority control having a long control cycle, and the "drive control of the mold clamping motor" and the "drive control of the mold space adjustment motor" are a high priority control having a short control cycle.

The control cycle is set in advance for each control according to a control content. Alternatively, the control cycle is set for each control by classifying the control into the low priority control and the high priority control in advance according to the control content.

By setting the control cycle of the "monitoring control of the mold clamping force" to be longer than the control cycles of the "drive control of the mold clamping motor" and the "drive control of the mold space adjustment motor", the processing load by the controller 700 is suppressed. Further, the processing load is suppressed, and thus, the high priority control such as the "drive control of the mold clamping motor" and the "drive control of the mold space adjustment motor" can be executed at a higher speed.

Moreover, the mold clamping force is not generated unless the mold is clamped, and thus, it is not necessary to continuously perform the mold clamping.

A time of the mold clamping is about 2 seconds to 5 minutes. Further, even when the mold is clamped, it is only necessary to obtain the actual value of the mold clamping force, and thus, the detection signal of the tie bar strain detector 141 indicating the mold clamping force may be acquired several times . Therefore, there is no side effect due to lengthening of the control cycle of the "monitoring control of the mold clamping force".

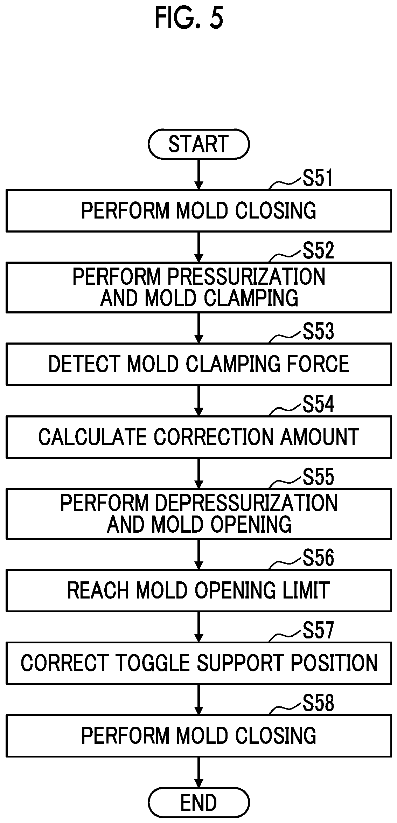

Fig. 5 is a flowchart showing processing for performing the correction/control of the mold clamping force according to the present embodiment.

First, the mold closing/pressurizing/clamping/depressurizing/opening process control unit 713 outputs the crosshead position command for moving the crosshead 151 forward to the mold closing completion position to the mold clamping motor control unit 715. The mold clamping motor control unit 715 compares the mold closing completion position indicated by the crosshead position command with a position input from the crosshead position acquisition unit 714. The mold clamping motor 160 is driven according to the comparison result to move the crosshead 151 forward to the mold closing completion position (Step S51) . Accordingly, the movable platen 120 moves forward, and the movable mold 820 comes into contact with the stationary mold 810.

Next, the mold closing/pressurizing/clamping/depressurizing/opening process control unit 713 outputs a crosshead position command for further moving the crosshead 151 forward to the mold clamping position in order to press the movable mold 820 to the mold clamping motor control unit 715. Moreover, the mold clamping position is a position of the crosshead 151 for generating the set mold clamping force.

The mold clamping motor control unit 715 compares the mold clamping position indicated by the crosshead position command with the position input from the crosshead position acquisition unit 714. The mold clamping motor 160 is driven according to the comparison result to move the crosshead 151 forward to the mold clamping position (Step S52). Accordingly, the pressure is increased to generate the mold clamping force, and the cavity space 801 is formed between the movable mold 820 and the stationary mold 810.

Next, the mold clamping force actual acquisition unit 711 acquires the actual value (detection value) of the mold clamping force based on the detection signal input from the tie bar strain detector 141 (Step S53).

Next, the mold clamping force correction control unit 712 compares the set value of the mold clamping force input from the set value acquisition unit 710 with the actual value of the mold clamping force, and calculates the correction amount. For example, in a case where the set value is 200T but the actual value of the mold clamping force is 180T, a difference is 200T-180T = 20T. In this case, the corrected mold clamping force is set to 200T + 20T = 220T.

Alternatively, for example, in a case where the set value is 200T but the actual value of the mold clamping force is 220T, the difference is 220T-200T = 20T. In this case, the corrected mold clamping force is set to 200T-20T = 180T (Step S54).

Next, the mold closing/pressurizing/clamping/depressurizing/opening process control unit 713 outputs a crosshead position command for moving the crosshead 151 rearward to the mold opening completion position to the mold clamping motor control unit 715. The mold clamping motor control unit 715 compares the mold opening completion position indicated by the crosshead position command with the position input from the crosshead position acquisition unit 714. The mold clamping motor 160 is driven according to the comparison result to move the crosshead 151 rearward to the mold opening completion position (Step S55). Accordingly, the movable platen 120 is moved rearward and depressurized, and the movable mold 820 is separated from the stationary mold 810.

Next, the mold closing/pressurizing/clamping/depressurizing/opening process control unit 713 outputs a crosshead position command for moving the crosshead 151 rearward to the mold opening limit position to the mold clamping motor control unit 715. In addition, the mold opening limit position is a position where the movable platen 120 connected to the toggle mechanism 150 is moved closest to the toggle support 130 side.

The mold clamping motor control unit 715 compares the mold opening limit position indicated by the crosshead position command with the position input from the crosshead position acquisition unit 714. The mold clamping motor 160 is driven according to the comparison result. Accordingly, the crosshead 151 reaches the mold opening limit position (Step S56).

Next, the mold clamping force correction control unit 712 corrects the mold clamping force by adjusting the mold space so that the corrected mold clamping force is obtained when the mold is clamped. For example, in the mold space adjustment, the gap L between the stationary platen 110 and the toggle support 130 is adjusted so that the link angle θ of the toggle mechanism 150 at the time of the mold touch when the movable mold 820 comes into contact with the stationary mold 810 becomes a predetermined angle. The mold clamping force correction control unit 712 outputs the toggle support position command according to the gap L to the mold space adjustment motor control unit 717.

The mold space adjustment motor control unit 717 compares the position indicated by the toggle support position command with the position input from the toggle support position acquisition unit 716. The mold space adjustment motor 183 is driven according to the comparison result to correct the position of the toggle support 130 (Step S57). Accordingly, the corrected mold clamping force can be obtained when the mold is clamped.

Next, the mold closing/pressurizing/clamping/depressurizing/opening process control unit 713 outputs a crosshead position command for moving the crosshead 151 forward to the mold closing completion position to the mold clamping motor control unit 715. The mold clamping motor control unit 715 compares the mold closing completion position indicated by the crosshead position command with the position input from the crosshead position acquisition unit 714, drives the mold clamping motor 160 according to the comparison result, and moves the crosshead 151 forward to the mold closing completion position (Step S58). Accordingly, the movable platen 120 moves forward, and the movable mold 820 comes into contact with the stationary mold 810.

In a case where the space of the mold unit 800 is changed by the replacement of the mold unit 800 as described above, the temperature change of the mold unit 800, or the like, as described above, the mold clamping force is corrected so that a predetermined mold clamping force is obtained when the mold is clamped.

Among the processing shown in Fig. 5, each processing of Steps S51 to S52, S55 to S56, and S58 is the "drive control of the mold clamping motor", and is the high priority control having a short control cycle. Further, the processing of Step S57 is the "drive control of the mold space adjustment motor" and is the high priority control having a short control cycle.

Meanwhile, Step S53 is the "monitoring control of mold clamping force" and is the low priority control having a long control cycle.

Here, returning to Fig. 4, the first prohibition unit 718, the second prohibition unit 719, and the crosshead arrival detection unit 720 will be described.

The first prohibition unit 718 prohibits a use of the mold clamping force by the tie bar strain detector 141 for performing the monitoring control on the mold clamping force at a time other than when the mold is clamped. More specifically, the first prohibition unit 718 prohibits at least one of issuing a request for acquiring the mold clamping force to the tie bar strain detector 141, storing the mold clamping force acquired from the tie bar strain detector 141, and/or comparing the mold clamping force obtained from the tie bar strain detector 141 with a predetermined set value, at a time other than when the mold is clamped.

The mold clamping force is generated only when the mold unit 800 is clamped, the detection signal detected by the tie bar strain detector 141 is significant only when the mold is clamped. However, since the detection signal detected by the tie bar strain detector 141 can be obtained even at a time other than when the mold is clamped, in some cases, an insignificant detection signal is input and the control processing according to the detection signal is executed, and the processing load increases. The increase in the processing load may hinder speeding up of the processing of the high priority control such as the "drive control of the mold clamping motor" and the "drive control of the mold space adjustment motor".

Further, the detection signal detected by the tie bar strain detector 141 is a detection signal indicating that the mold clamping force is zero, at a time other than when the mold is clamped. The detection signal indicating that the mold clamping force is zero may make a command output by the high priority control such as the "drive control of the mold clamping motor" and the "drive control of the mold space adjustment motor" indefinite.

By prohibiting the detection of the mold clamping force by the tie bar strain detector 141 except during the mold clamping by the first prohibition unit 718, it is possible to prevent the insignificant detection signal from being input from the tie bar strain detector 141 and the control processing according to the detection signal from being executed. Thereby, the above-mentioned trouble can be prevented.

Moreover, the first prohibition unit 718 may prohibit update of the actual value of the mold clamping force by the mold clamping force actual acquisition unit 711. This also has the same effect as prohibiting the detection of the mold clamping force by the tie bar strain detector 141 or the acquisition of the actual value by the mold clamping force actual acquisition unit 711.

Meanwhile, the second prohibition unit 719 prohibits the drive control of the mold space adjustment motor 183 when the mold is clamped. In other words, the second prohibition unit 719 prohibits the mold clamping force correction control unit 712 from outputting the toggle support position command to the mold space adjustment motor control unit 717 when the mold is clamped.

Since the toggle support 130 cannot be moved while the mold is clamped, it is not possible to execute the "drive control of the mold space adjustment motor". However, since the detection signal detected by the tie bar strain detector 141 is obtained, the toggle support position command according to the detection signal is output. Therefore, the processing load may increase due to execution of an insignificant control processing. The increase in the processing load may hinder speeding up of the processing of the high priority control such as the "drive control of the mold clamping motor" and the "drive control of the mold space adjustment motor".

The second prohibition unit 719 prohibits the mold clamping force correction control unit 712 from outputting the toggle support position command to the mold space adjustment motor control unit 717 while the mold is clamped, and thus, it is possible to prevent the insignificant toggle support position command from being output. Thereby, the above-mentioned trouble can be prevented.

The crosshead arrival detection unit 720 detects that the crosshead 151 has reached within a predetermined position range from the mold clamping position based on the position of the crosshead 151 input from the crosshead position acquisition unit 714. The detection result is output to the first prohibition unit. The first prohibition unit can know whether or not the mold is being clamped from the detection result.

Further, the crosshead arrival detection unit 720 detects that the crosshead 151 has reached within the predetermined position range from the mold opening position based on the position of the crosshead 151 by the crosshead position acquisition unit 714. The detection result is output to the second prohibition unit. The second prohibition unit can know whether or not the mold is being opened from the detection result.

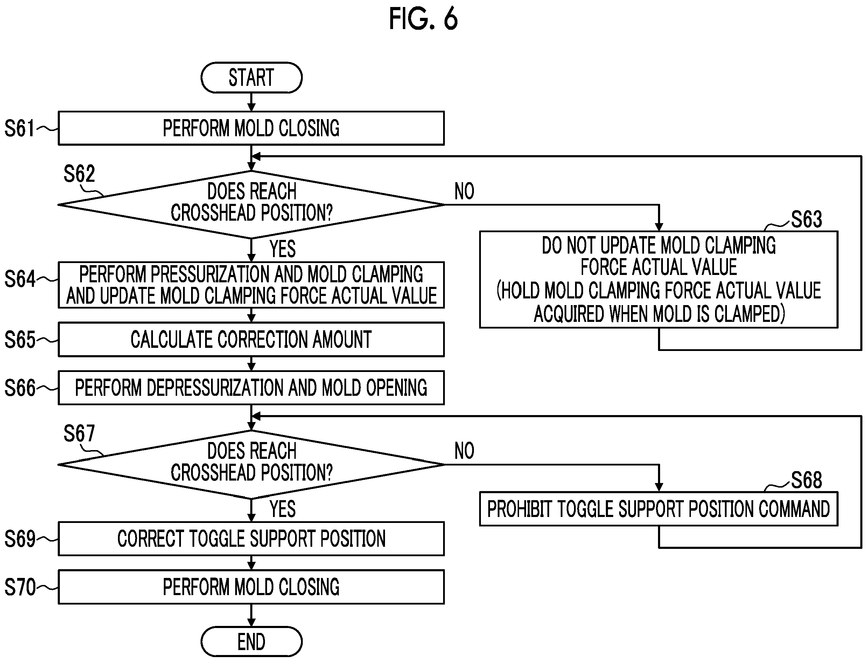

Fig. 6 is a flowchart showing processing for the correction/control on the mold clamping force in a case where the first prohibition unit 718 and the second prohibition unit 719 are used.

First, the mold closing/pressurizing/clamping/depressurizing/opening process control unit 713 outputs the crosshead position command for moving the crosshead 151 forward to the mold closing completion position to the mold clamping motor control unit 715. The mold clamping motor control unit 715 compares the mold closing completion position indicated by the crosshead position command with a position input from the crosshead position acquisition unit 714. The mold clamping motor 160 is driven according to the comparison result, and the crosshead 151 is moved forward to the mold closing completion position (Step S61) . Accordingly, the movable platen 120 moves forward, and the movable mold 820 comes into contact with the stationary mold 810.

Next, the crosshead arrival detection unit 720 determines that the crosshead 151 has reached within the predetermined position range from the mold clamping position based on the position of the crosshead 151 input from the crosshead position acquisition unit 714 (Step S62).

In a case where the crosshead 151 does not reach within the predetermined position range from the mold clamping position (No in Step S62), the first prohibition unit 718 prohibits the update of the actual value of the mold clamping force by the mold clamping force actual acquisition unit 711. Therefore, the mold clamping force actual acquisition unit 711 holds the actual value of the mold clamping force acquired when the mold is clamped (Step S63). After that, the process returns to Step S62.

Moreover, in the case where the crosshead 151 does not reach within the predetermined position range from the mold clamping position (No in Step S62), the first prohibition unit 718 may prohibit the detection of the mold clamping force by the tie bar strain detector 141 or the acquisition of the actual value by the mold clamping force actual acquisition unit at a time other than when the mold is clamped. This also has the same effect as prohibiting the update of the actual value of the mold clamping force by the mold clamping force actual acquisition unit 711.

In a case where the crosshead 151 reaches within a predetermined position range from the mold clamping position (Yes in Step S62), the mold closing/pressurizing/clamping/depressurizing/opening process control unit 713 outputs a crosshead position command for further moving the crosshead 151 foward to the mold clamping position to the mold clamping motor control unit 715. The mold clamping motor control unit 715 compares the mold clamping position indicated by the crosshead position command with the position input from the crosshead position acquisition unit 714. The mold clamping motor 160 is driven according to the comparison result to move the crosshead 151 forward to the mold clamping position. After the pressure is increased and the mold clamping force is generated, the mold clamping force actual acquisition unit 711 acquires and updates the actual value of the mold clamping force value based on the detection signal input from the tie bar strain detector 141, and outputs the actual value to the mold clamping force correction control unit 712 (Step S64).

Next, the mold clamping force correction control unit 712 compares the set value of the mold clamping force input from the set value acquisition unit 710 with the actual value of the mold clamping force, and calculates a correction amount (Step S65) .

Next, the mold closing/pressurizing/clamping/depressurizing/opening process control unit 713 outputs a crosshead position command for moving the crosshead 151 rearward to the mold opening completion position to the mold clamping motor control unit 715. The mold clamping motor control unit 715 compares the mold opening completion position indicated by the crosshead position command with the position input from the crosshead position acquisition unit 714. The mold clamping motor 160 is driven according to the comparison result, and the crosshead 151 is moved rearward to the mold opening completion position. Accordingly, the movable platen 120 is moved rearward and depressurized, and the movable mold 820 is separated from the stationary mold 810.

After the movable mold 820 is separated from the stationary mold 810, the mold closing/pressurizing/clamping/depressurizing/opening process control unit 713 outputs a crosshead position command for moving the crosshead 151 rearward to the mold opening limit position to the mold clamping motor control unit 715 (Step S66).

Next, the crosshead arrival detection unit 720 detects that the crosshead 151 has reached within the predetermined position range from the mold opening position based on the position of the crosshead 151 by the crosshead position acquisition unit 714 (Step S67).

In a case where the crosshead 151 does not reach within the predetermined position range from the mold opening position (No in Step S67), the second prohibition unit 719 prohibits the mold clamping force correction control unit 712 from outputting the toggle support position command to the mold space adjustment motor control unit 717 (Step S68). After that, the process returns to Step S67.

In the case where the crosshead 151 reaches within a predetermined position range from the mold opening position (Yes in Step S67), after the crosshead 151 reaches the mold opening limit position, the mold clamping force correction control unit 712 adjust the mold space so that the corrected mold clamping force is obtained when the mold is clamped to correct the mold clamping force. The mold clamping force correction control unit 712 outputs the toggle support position command to the mold space adjustment motor control unit 717. The mold space adjustment motor control unit 717 compares the position indicated by the toggle support position command with the position input from the toggle support position acquisition unit 716. The mold space adjustment motor 183 is driven according to the comparison result to adjust the position of the toggle support 130 (Step S69). Accordingly, the corrected mold clamping force can be obtained when the mold is clamped.

Next, the mold closing/pressurizing/clamping/depressurizing/opening process control unit 713 outputs a crosshead position command for moving the crosshead 151 forward to the mold closing completion position to the mold clamping motor control unit 715. The mold clamping motor control unit 715 compares the mold closing completion position indicated by the crosshead position command with a position input from the crosshead position acquisition unit 714. The mold clamping motor 160 is driven according to the comparison result to move the crosshead 151 forward to the mold closing completion position (Step S70). Accordingly, the movable platen 120 moves forward, and the movable mold 820 comes into contact with the stationary mold 810.

In the case where the space of the mold unit 800 is changed by the replacement of the mold unit 800, the temperature change of the mold unit 800, or the like, as described above, the mold clamping force is corrected so that a predetermined mold clamping force is obtained when the mold is clamped.

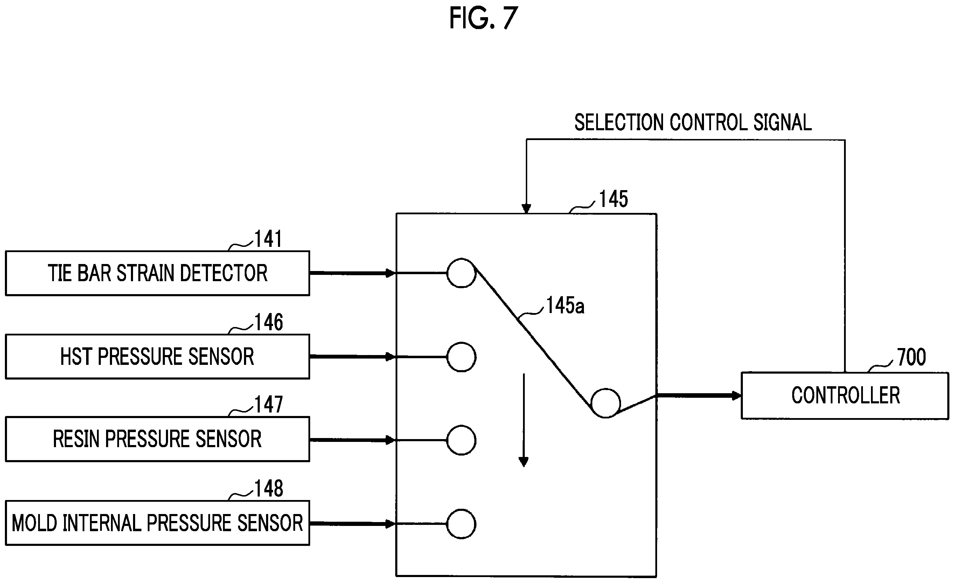

Next, Fig. 7 is a diagram showing a multiplexer which receives a detection signal according to the present embodiment. The multiplexer is a mechanism which outputs two or more inputs as one signal.

As shown in Fig. 7, a multiplexer 145 is electrically connected to the tie bar strain detector 141, a Hydrostatic Transmission (HST) pressure sensor 146, a resin pressure sensor 147, a mold internal pressure sensor 148, the controller 700, or the like.

In a case where the injection molding machine 10 has a hydraulic power transmission mechanism such as a hydraulic cylinder, the HST pressure sensor 146 outputs a detection signal indicating a hydraulic pressure in the power transmission mechanism. The resin pressure sensor 147 outputs a detection signal indicating a resin pressure applied to the molding material in the injection unit 300 or the like. The mold internal pressure sensor 148 outputs a detection signal indicating the pressure applied to the molding material in the cavity space 801. However, types and the numbers of signals input to the multiplexer 145 are not limited to these. In addition, detection signals detected by a plurality of sensors may be input.

A detection signal detected by the tie bar strain detector 141, a detection signal detected by the HST pressure sensor 146, a detection signal detected by the resin pressure sensor 147, and a detection signal detected by the mold internal pressure sensor 148 are input to the multiplexer 145. Further, a selection control signal for switching a movable contact of the multiplexer 145 is input from the controller 700.

The multiplexer 145 switches the movable contact 145a according to a selection control signal input from the controller 700. Accordingly, the detection signal output to the controller 700 by the multiplexer 145 is switched. The controller 700 can select the detection signal input from each sensor or detector via the multiplexer 145.

For example, the multiplexer 145 is disposed inside the controller 700, inside the frame 900, or the like.

By the multiplexer 145, the detection signal detected by the tie bar strain detector 141 can be input to the controller 700 in common with analog signals of the HST pressure sensor 146, the resin pressure sensor 147, the mold internal pressure sensor 148, or the like. Accordingly, the number of input ports used in the high priority control in the controller 700 can be reduced.

As described above, according to the present embodiment, by setting the control cycle of the "monitoring control of the mold clamping force" be longer than the control cycles of the "drive control of the mold clamping motor" and the "drive control of the mold space adjustment motor", it is possible to suppress the processing load of the controller 700. Further, by suppressing the processing load, the high priority control such as the "drive control of the mold clamping motor" and the "drive control of the mold space adjustment motor" can be further speeded up.

According to the present embodiment, the first prohibition unit 718 prohibits the detection of the mold clamping force by the tie bar strain detector 141 except when the mold is clamped. Accordingly, it is possible to prevent the insignificant detection signal from being input from the tie bar strain detector 141 and the control processing according to the detection signal from being executed, and thus, it is possible to suppress the processing load. Further, it is possible to speed up the processing of the high priority control such as the "drive control of the mold clamping motor" and the "drive control of the mold space adjustment motor". Further, it is possible to prevent the command to the high priority control from being indefinite.

According to the present embodiment, the second prohibition unit 719 prohibits the mold clamping force correction control unit 712 from outputting the toggle support position command to the mold space adjustment motor control unit 717 while the mold is clamped. Accordingly, it is possible to prevent the insignificant toggle support position command from being output and suppress the processing load. In addition, the processing speed of the high priority control can be speeded up.

According to the present embodiment, the detection signal detected by the tie bar strain detector 141 is input to the controller 700 in common with other analog signals via the multiplexer 145. Accordingly, the number of input ports used in the high priority control in the controller 700 can be reduced.

### [Second Embodiment]

In the second embodiment, an example is shown in which the correction/control of the mold clamping force is executed by using the crosshead. Moreover, in the first embodiment, descriptions of the same components as those in the above-described embodiment may be omitted.

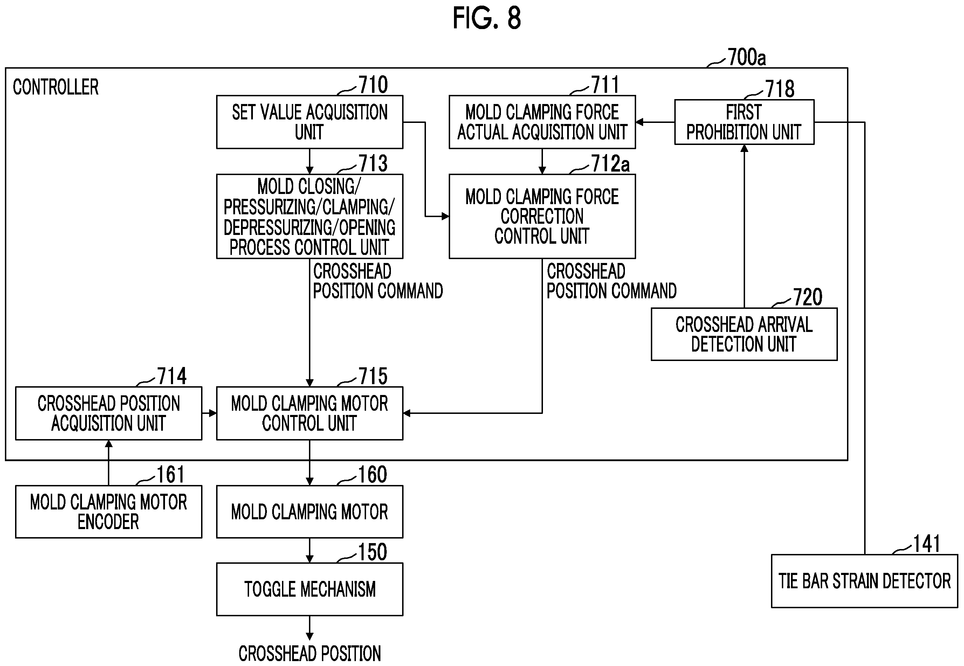

Fig. 8 is a functional block diagram showing components of a controller according to the present embodiment. The controller 700a has a mold clamping force correction control unit 712a.

The mold clamping force correction control unit 712a compares the actual value of the mold clamping force input from the mold clamping force actual acquisition unit 711 with the set value of the mold clamping force input from the set value acquisition unit 710. According to the comparison result, the crosshead position command is output to the mold clamping motor control unit 715, and the crosshead 151 is moved forward or rearward to a position where a predetermined mold clamping force can be obtained when the mold is clamped.

That is, the mold clamping force correction control unit 712a drives the mold clamping motor 160 to adjust the position of the crosshead 151 instead of driving the mold space adjustment motor 183 to adjust the position of the toggle support 130, and thus performs the correction/control of the mold clamping force.

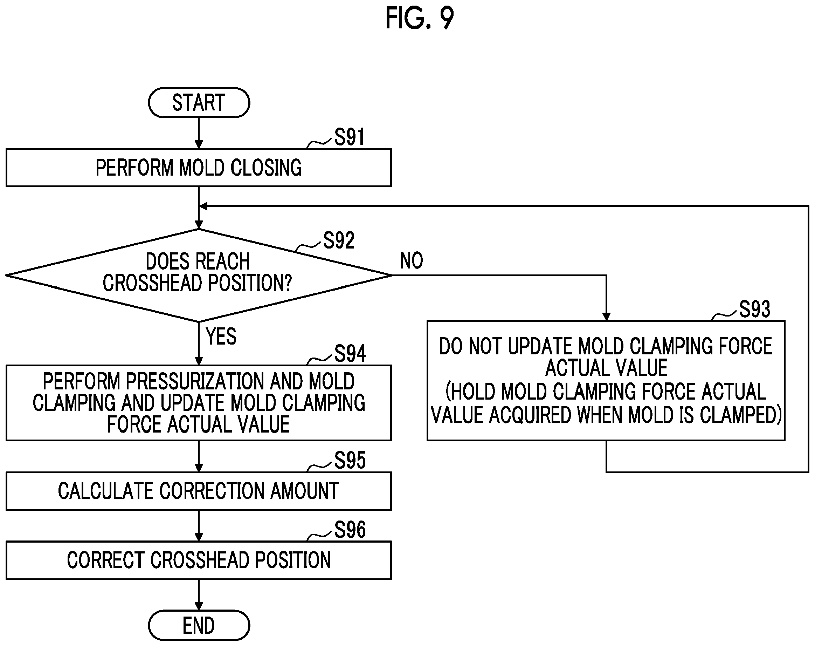

Fig. 9 is a flowchart showing processing for performing the correction/control on the mold clamping force of the present embodiment.

Processing of Steps S91 to S95 is the same as the processing of Steps S61 to S65 of Fig. 6, and thus, are omitted.

After Step S95 is executed, the mold clamping force correction control unit 712a corrects the mold clamping force by adjusting the position of the crosshead 151 so that the corrected mold clamping force can be obtained. The mold clamping force correction control unit 712a outputs a crosshead position command to the mold clamping motor control unit 715. The mold clamping motor control unit 715 compares the position indicated by the crosshead position command with the position input from the crosshead position acquisition unit 714. The mold clamping motor 160 is driven according to the comparison result to adjust the position of the crosshead 151 (Step S96) . Accordingly, the corrected mold clamping force can be obtained.

In the case where the space of the mold unit 800 is changed by the replacement of the mold unit 800, the temperature change of the mold unit 800, or the like, as described above, the mold clamping force is corrected so that a predetermined mold clamping force is obtained.

In the present embodiment, the control cycle of the "monitoring control of the mold clamping force" in the correction of the mold clamping force using the crosshead 151 is set to be longer than the control cycle of the "drive control of the mold clamping motor". For example, the control cycle of the "monitoring control of the mold clamping force" is one second, and the control cycle of the "drive control of the mold clamping motor" for correcting the mold clamping force using the crosshead 151 is 0.1 seconds.

In other words, the "monitoring control of the mold clamping force" in the correction of the mold clamping force using the crosshead 151 is the low priority control having a long control cycle, and the "drive control of the mold clamping motor" to correct the mold clamping force using the crosshead 151 is the high priority control having a short control cycle.

The control cycle is set in advance for each control according to a control content. Alternatively, the control cycle is set for each control by classifying the control into the low priority control and the high priority control in advance according to the control content.

By setting the control cycle of the "monitoring control of the mold clamping force" in the correction of mold clamping force using the crosshead 151 to be longer than the control cycle of the "drive control of mold clamping motor" in the correction of mold clamping force using the crosshead 151, the processing load of the controller 700 can be suppressed. Further, by suppressing the processing load, the high priority control such as the "control of the mold clamping motor" can be further speeded up.

Further, the correction/control of the mold clamping force can also be executed in the mold clamping unit and the injection molding machine which do not have the mold space adjustment motor 183.

Further, unlike the correction/control of the mold clamping force using the mold space adjustment motor 183, the correction/control of the mold clamping force can be executed in the mold clamping state without returning to the mold opening state. Processing of the correction/control of the mold clamping force can be simplified, and a processing time can be shortened.

Effects in a case where the first prohibition unit 718 and the multiplexer 145 are used are the same as those described in the first embodiment.

Hereinbefore, the embodiments of the drive control of the mold clamping motor, the drive control of the mold space adjustment motor, and the monitoring control of the mold clamping force are described. However, the present invention is not limited to these, and can be applied to various controls in a series of processes in the injection molding machines 10. A specific modification example (application example) will be described below.

### [Modification Example]

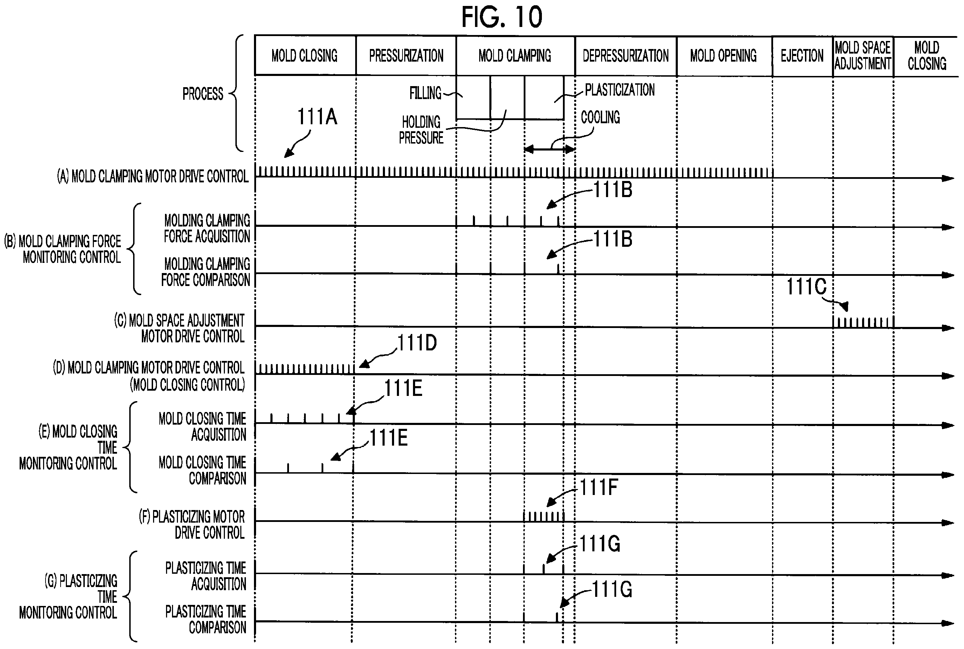

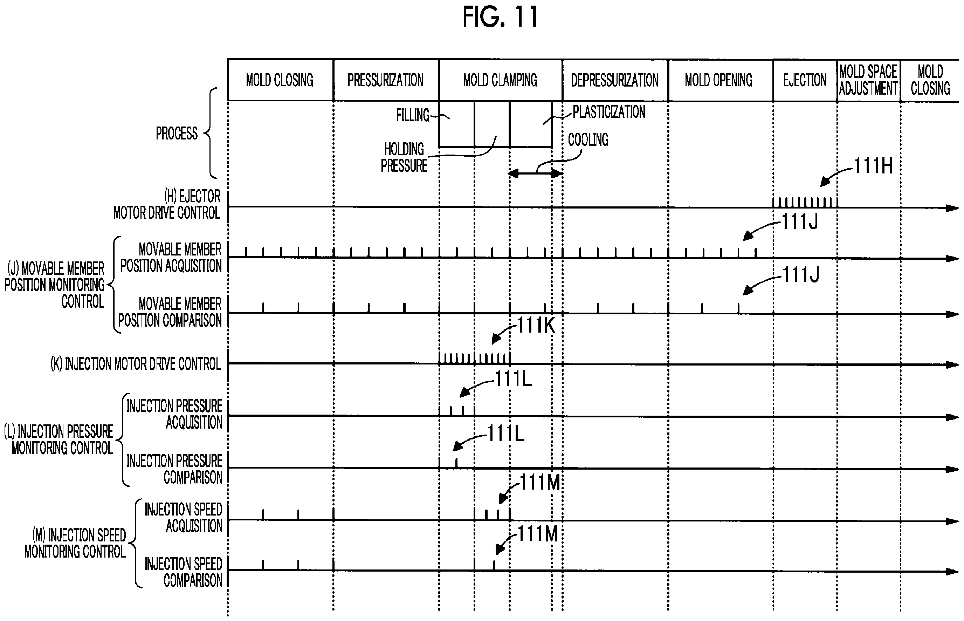

Fig. 10 is a diagram showing an example of a section in which various controls are performed in a series of processes of the injection molding machine 10 and the control cycle thereof. Further, Fig. 11 is a diagram showing another example of a section in which various controls are performed in a series of processes of the injection molding machine 10 and a control cycle thereof. First, the section in which the "drive control of the mold clamping motor", the "monitoring control of the mold clamping force", and the "drive control of the mold space adjustment motor" shown in the first and second embodiments are performed and the control cycles thereof will be described with reference to Fig. 10.

The uppermost portion of Fig. 10 shows the process performed by the injection molding machine 10 under the control of the controller 700, and a direction from left to right shows a passage of time. From left to right in Fig. 10, the processes proceed in the order of the mold closing process, the pressurization process, the mold clamping process, the filling process, the holding pressure process, the plasticizing process, the depressurization process, the mold opening process, and ejection process. However, the mold clamping process, and the filling/holding pressure/plasticizing processes are performed in parallel, they are shown in the same section. Further, a cooling process of the mold unit 800 is provided from the start of the plasticizing process to the start of the depressurization process.

In a case where the space of the mold unit 800 is changed due to replacement of the mold unit 800, the temperature change of the mold unit 800, or the like after the molding product is taken out in the ejection process, the mold space is adjusted so that the predetermined mold clamping force is obtained when the time is clamped, and thereafter, the process proceeds to the mold closing process of the next cycle.

Various controls are shown in each stage below the stage indicating the processes. Then, respective control sections and control cycles are indicated by vertical bars 111 (111A to 111G) in association with the processes. Here, a gap between the vertical bars 111 indicates a length of the control cycle. As the gap between the vertical bars 111 is narrowed, the control cycle is shortened, and as the gap between the vertical bars 111 is widened, the control cycle is lengthened.

In a stage (A) immediately below the stage showing the process, a section and a control cycle of the drive control of the mold clamping motor 160 are shown. The section of the drive control of the mold clamping motor 160 is a section from the start of the mold closing process to the completion of the mold opening process, as shown by the vertical bars 111A in Fig. 10. As described above, the drive control of the mold clamping motor 160 is the high priority control having a short control cycle. Therefore, a gap between the vertical bars 111A is narrow.

In a stage (B) immediately below the stage (A), a section and a control cycle of the monitoring control of the mold clamping force and the control cycle are shown. As described above, the monitoring control of the mold clamping force is at least one of acquiring the detection value of the mold clamping force by the tie bar strain detector 141 or/and comparing the detection value of the mold clamping force by the tie bar strain detector 141 with the predetermined set value. Therefore, in Fig. 10, a mold clamping force acquisition control and a mold clamping force comparison control are respectively shown as a breakdown of the monitoring control of the mold clamping force.

The section in which the monitoring control of the mold clamping force is performed is a section from the start of the mold clamping process to the completion of the mold clamping process, as shown by the vertical bars 111B in Fig. 10. As described above, the monitoring control of the mold clamping force is the low priority control, and the control cycle of the monitoring control is longer than that of the drive control of the mold clamping motor 160. Therefore, in the monitoring control of the mold clamping force in the stage (B), a gap between the vertical bars 111B is wider than that of the vertical bars 111A in the drive control of the mold clamping motor 160 in the stage (A).

Further, the comparison control of the mold clamping force does not need to be executed using all the detection values of the mold clamping force acquired by the acquisition control of the mold clamping force, and an average value of the acquired plurality of measured values or the like may be compared with the set value. Accordingly, the control cycle of the comparison control of the mold clamping force may be longer than the control cycle of the acquisition control of the mold clamping force. Therefore, in the comparison control of the mold clamping force, a gap between the vertical bars 111B is wider than that in the acquisition control of the mold clamping force. However, the control cycles of the acquisition control of the mold clamping force and the comparison control thereof may be the same as each other.

In a stage (C) immediately below the stage (B), the section and the control cycle of the drive control of the mold space adjustment motor 183 are shown. The section of the drive control of the mold space adjustment motor 183 is a section from a start of a mold space adjustment process to a completion of the mold space adjustment process, as shown by the vertical bars 111C in Fig. 10. The drive control of the mold space adjustment motor 183 is the high priority control having a short control cycle as described above. Therefore, a gap between the vertical bars 111C is narrower than that of the vertical bars 111B in the monitoring control of the mold clamping force in the stage (B) .

In the following, as modification examples of the embodiment, a mold closing control, a monitoring control of the mold closing time, a plasticizing control, a monitoring control of a plasticizing time, an ejection control, a position monitoring control of the movable member, an injection control, and a monitoring control of the injection pressure (injection speed) will be described with reference to Figs. 10 and 11.

### <Mold Closing Control and Monitoring Control of Mold Closing Time>

First, the mold closing control and the monitoring control of the mold closing time will be described.

Here, the mold closing control refers to the drive control of the mold clamping motor 160 performed in the mold closing process. More specifically, the mold closing control is a drive control of the mold clamping motor 160 for moving the movable platen 120 forward and bring the movable mold 820 into contact with the stationary mold 810 by moving the crosshead 151 to the mold closing completion position at the set movement speed in the mold closing process. In other words, the mold closing control is a control, which is performed in the mold closing process, among the drive controls of the mold clamping motor 160 of the stage (A).

Meanwhile, the monitoring control of the mold closing time refers to at least one of acquiring a measured value of a time by the timer 705 (refer to Figs. 1 and 2) which starts a time measurement when the controller 700 outputs a start command of the mold closing process or/and comparing the measured value of the time by the timer 705 with a predetermined set value.

In the mold closing process, in a case where an abnormality such as a foreign matter of a part or the like entering between the stationary platen 110 and the movable platen 120 occurs, if the drive control of the mold clamping motor 160 is continuously executed in the state where the abnormality occurs, the mold unit 800 may be damaged by the foreign matter. Meanwhile, when the abnormality occurs, the crosshead 151 does not move forward to the position of the set value, and the drive control of the mold clamping motor 160 is not completed even after a lapse of time.

Therefore, the controller 700 executes the monitoring control of the mold closing time, and stops the drive control of the mold clamping motor 160 in a timely manner in a case where the measured value of the time by the timer 705 exceeds the predetermined set value. Accordingly, it is possible to prevent damages of the mold unit 800 and protect the mold unit 800.

The drive control of the mold clamping motor 160 can be set to the high priority control having a short control cycle, similar to the drive control of the mold clamping motor 160 in the stage (A). Meanwhile, since the monitoring control of the mold closing time does not require a high response, the monitoring control can be set to the low priority control, and the control cycle of the monitoring control can be longer than that of the drive control of the mold clamping motor 160.

Here, the section in which the mold closing control and the monitoring control of the mold closing time are performed and the control cycle thereof will be described.

In Fig. 10, in a stage (D) immediately below the stage (C), the section and the control cycle of the drive control of the mold clamping motor 160 performed in the mold closing process are shown. The section of the drive control of the mold clamping motor 160 performed in the mold closing process is a section from the start of the mold closing process to the completion of the mold closing process, as shown by the vertical bars 111D in Fig. 10. As described above, since the drive control of the mold clamping motor 160 is the high priority control having a short control cycle, a gap between the vertical bars 111D is narrow.

In a stage (E) immediately below the stage (D), the section and the control cycle of the monitoring control of the mold closing time are shown. Similar to the monitoring control of the mold clamping force or the like described above, a mold clamping time acquisition control and a mold closing time comparison control are respectively shown as a breakdown of the monitoring control of the mold closing time.

The section in which the monitoring control of the mold closing time is performed is a section from the start of the mold closing process to the completion of the mold closing process, as shown by the vertical bars 111E in Fig. 10.

As described above, the monitoring control of the mold closing time is the low priority control, and thus, the control cycle of the monitoring control is longer than that of the drive control of the mold clamping motor 160. Therefore, in the monitoring control of the mold closing time in the stage (E), a gap between the vertical bars 111E is wider than that of the vertical bars 111D in the drive control of the mold clamping motor 160 in the stage (D).

In addition, the comparison control of the mold closing time does not require strict accuracy and it is not necessary to execute the comparison control of the mold closing time using all the measured values of the mold closing time acquired by the acquisition control of the mold closing time. Accordingly, the control cycle of the comparison control of the mold closing time may be longer than the control cycle of the acquisition control of the mold closing time. Therefore, in the comparison control of the mold closing time, the gap between the vertical bars 111E is wider than that in the acquisition control of the mold closing time. However, the control cycles of the acquisition control and the comparison control of the mold closing time may be the same as each other.

In this way, in the mold closing control and the monitoring control of the mold closing time, by setting the control cycle of the "monitoring control of the mold closing time" to be longer than the control cycle of the "mold closing control", it is possible to suppress the processing load of the controller 700. Further, by suppressing the processing load, the high priority control such as the "mold closing control" can be further speeded up.

### <Plasticizing Control and Monitoring Control of Plasticizing Time>

Next, the plasticizing control and the monitoring control of the plasticizing time will be described.

Here, the plasticizing control refers to the drive control of the plasticizing motor 340 performed in the plasticizing process. More specifically, the plasticizing control refers to a drive control of the plasticizing motor 340 for rotating the screw 330 at the set rotating speed in the plasticizing process, feeding the molding material forward along the helical groove of the screw 330, and accumulating a predetermined amount of molding material in front of the screw 330.

Further, the drive control of the plasticizing motor 340 refers to feedback control of the plasticizing motor 340 which causes a deviation between the detection value of the rotating speed of the screw 330 by the plasticizing motor encoder 341 and the predetermined set value to be zero.

Further, the monitoring control of the plasticizing time refers to at least one of acquiring a measured value of a time by the timer 705 which starts a time measurement when the controller 700 outputs a start command of the plasticizing process or/and comparing the measured value of the time by the timer 705 with the predetermined set value.

In the plasticizing process, in a case where an abnormality such as a shortage of a resin to be supplied occurs, the screw 330 may not move rearward to the plasticizing completion position, and the drive control of the plasticizing motor 340 may not be completed even after a lapse of time.

Therefore, the controller 700 executes the monitoring control of the plasticizing time, and stops the drive control of the plasticizing motor 340 when the measured value of the time by the timer 705 exceeds the predetermined set value. Accordingly, the plasticizing control can be stopped in a timely manner when an abnormality such as the shortage of the resin to be supplied occurs.

Since the drive control of the plasticizing motor 340 is a precision operation and requires a high response, the drive control can be set to the high priority control. Meanwhile, the monitoring control of the plasticizing time does not require a high response, and thus, the monitoring control can be set to the low priority control, and the control cycle of the monitoring control can be longer than that of the drive control of the plasticizing motor 340.

Here, the section in which the plasticizing control and the monitoring control of the plasticizing time are performed and the control cycle thereof will be described.

In Fig. 10, in a stage (F) immediately below the stage (E), the section and the control cycle of the drive control of the plasticizing motor 340 are shown. The section of the drive control of the plasticizing motor 340 is a section from the start of the plasticizing process to the completion of the plasticizing process, as shown by the vertical bars 111F in Fig. 10. Since the drive control of the plasticizing motor 340 is the high priority control having a short control cycle, a gap between the vertical bars 111F is narrow.

In a stage (G) immediately below the stage (F), the section and the control cycle of the monitoring control of the plasticizing time are shown. Similar to the monitoring control of the mold clamping force or the like described above, a plasticizing time acquisition control and a plasticizing time comparison control are respectively shown as a breakdown of the plasticizing time monitoring control.

The section in which the monitoring control of the plasticizing time is performed is a section from the start of the plasticizing process to the completion of the plasticizing process, as shown by the vertical bars 111G in Fig. 10.

As described above, the monitoring control of the plasticizing time is the low priority control, and the control cycle of the monitoring control is longer than that of the drive control of the plasticizing motor 340. Therefore, in the monitoring control of the plasticizing time in the stage (G), a gap between the vertical bars 111G is wider than that of the vertical bars 111F in the drive control of the plasticizing motor 340 in the stage (F).

Further, the comparison control of the plasticizing time does not require strict accuracy and it is not necessary to execute the comparison control of the plasticizing time using all the measured values of the plasticizing time acquired by the acquisition control of the plasticizing time. Accordingly, the control cycle of the comparison control of the plasticizing time may be longer than the control cycle of the acquisition control of the plasticizing time. Therefore, in the comparison control of the plasticizing time, the gap between the vertical bars 111G is wider than that in the acquisition control of the plasticizing time. However, the control cycles of the acquisition control and the comparison control of the plasticizing time may be the same as each other.

In this way, in the plasticizing control and the monitoring control of the plasticizing time, by setting the control cycle of the "monitoring control of the plasticizing time" to be longer than the control cycle of the "plasticizing control", it is possible to suppress the processing load of the controller 700. Further, by suppressing the processing load, the high priority control such as the "plasticizing control" can be further speeded up.

### <Ejection Control and Position Monitoring Control of Movable Member>

Next, the ejection control and the position monitoring control of the movable member 830 will be described.

Here, the ejection control refers to the drive control of the ejector motor 210 performed in the ejection process. More specifically, in the ejection process, the controller 700 drives the ejector motor 210 to move the ejector rod 230 forward from the standby position to the ejection position at the set movement speed, and thus, the movable member 830 moves forward and the molding product is ejected. Thereafter, the ejector motor 210 is driven to move the ejector rod 230 rearward at a set movement speed, and thus, the movable member 830 moves rearward to an original standby position. The ejection control is the drive control of the ejector motor 210.

Further, the drive control of the ejector motor 210 refers to a feedback control of the ejector motor 210 which causes a deviation between the detection value of the position or the movement speed of the ejector rod 230 by the ejector motor encoder 211, and the predetermined set value to be zero.

Further, the position monitoring control of the movable member 830 is at least one of acquiring the detection value detected by the proximity sensor 831 (refer to Figs. 1 and 2) provided near the standby position of the movable member 830, and/or comparing the detection value of the proximity sensor 831 with the predetermined set value.

The proximity sensor 831 is a detector which detects the position of the movable member 830. As the proximity sensor 831, a capacitance type sensor or the like can be used. When the movable member 830 is in the standby position, a capacitance is generated between the proximity sensor 831 and the movable member 830, and thus, the proximity sensor 831 can output an electric signal indicating the position of the movable member 830.

Meanwhile, when the movable member 830 is deviated from the standby position, the capacitance is not generated between the proximity sensor 831 and the movable member 830, and thus, the proximity sensor 831 cannot output the electric signal indicating the position of the movable member 830. In this way, the controller 700 can acquire a detection value of whether or not the movable member 830 has returned to the standby position, based on the output of the proximity sensor 831. Further, the controller 700 may acquire in advance a table indicating a correspondence between the output of the proximity sensor 831 and the position of the movable member 830, and may acquire the detection value of the position of the movable member 830 with reference to the table based on the output of the proximity sensor 831. An eddy current type or optical type proximity sensor may be used instead of the capacitance type sensor.

Further, the position of the movable member 830 can be detected based on the detection value of the ejector motor encoder 211. In particular, in a case where the ejector rod 230 and the movable member 830 are mechanically connected to each other and the movable member 830 moves rearward according to the rearward movement of the ejector rod 230, it is more preferable that the detection value of the ejector motor encoder 211 is used. However, even in a case where the ejector rod 230 and the movable member 830 are not mechanically connected to each other and the movable member 830 is moved rearward due to a biasing force of a spring according to the rearward movement of the ejector rod 230, it is possible to use the detection value of the ejector motor encoder 211.

In the ejection process, the movable member 830 may not return to the original standby position due to a foreign matter entering a path in which the movable member 830 moves rearward. In a state where the movable member 830 is not returned to the original standby position, if the subsequent mold closing process, pressurization process, mold clamping process, filling process, holding pressure process, plasticizing process, depressurization process, mold opening process, or the like is performed, the mold unit 800 and the movable member 830 may come into contact with each other to damage the mold unit 800.

Therefore, the controller 700 executes the position monitoring control of the movable member 830 using the proximity sensor 831, and when the detection value of the position based on the output of the proximity sensor 831 is not within the predetermined set value, the controller stops the drive control of the mold clamping motor 160 in a timely manner. Accordingly, it is possible to prevent damages of the mold unit 800 and protect the mold unit 800.

Since the drive control of the ejector motor 210 is a precision operation and requires a high response, the drive control can be set to the high priority control. Meanwhile, the position monitoring control of the movable member 830 does not require a high response, and thus, the position monitoring control can be set to the low priority control, and the control cycle of the position monitoring control can be longer than that of the drive control of the ejector motor 210.

Here, a section in which the ejection control and the position monitoring control of the movable member 830 are performed and a control cycle thereof will be described with reference to Fig. 11.

In Fig. 11, in the stage (H) immediately below the stage showing the process, a section of the drive control of the ejector motor 210 and a control cycle thereof are shown. The section of the drive control of the ejector motor 210 is a section from the start of the ejection process to the completion of the ejection process, as shown by the vertical bars 111H in Fig. 11. As described above, since the drive control of the ejector motor 210 is the high priority control having a short control cycle, a gap between the vertical bars 111H is narrow.

In the stage (J) immediately below the stage (H), the section of the position monitoring control of the movable member 830 and the control cycle thereof are shown. Similar to the monitoring control of the mold clamping force or the like described above, a position acquisition control of the movable member 830 and a position comparison control of the movable member 830 are respectively shown as a breakdown of the position monitoring control of the movable member 830.

A section in which the position monitoring control of the movable member 830 is performed is a period from the completion of the rearward movement of the ejector rod 230 to the start of the ejection process. More specifically, as an example, as shown by the vertical bars 111J in Fig. 11, the second of the position monitoring control is a section from the start of the mold closing process to the completion of the mold opening process.

As described above, the position monitoring control of the movable member 830 is the low priority control, and thus, the control cycle of the position monitoring control is longer than that in the drive control of the ejector motor 210. Therefore, in the position monitoring control of the movable member 830 in the stage (J), a gap between the vertical bars 111J is wider than that of the vertical bars 111H in the drive control of the ejector motor 210 in the stage (H).

Further, the position comparison control of the movable member 830 does not need to be executed using all the detection values of the positions of the movable member 830 acquired by the position acquisition control of the movable member 830 and an average value of the plurality of acquired detection values or the like may be compared with the set value. Accordingly, the control cycle of the position comparison control of the movable member 830 may be longer than the control cycle of the position acquisition control of the movable member 830. Therefore, in the position comparison control of the movable member 830, the gap between the vertical bars 111J is wider than that in the position acquisition control of the movable member 830. However, the control cycles of the position acquisition control and the comparison control of the movable member 830 may be the same as each other.

In this way, in the ejection control and the position monitoring control of the movable member 830, by setting the control cycle of the "monitoring control of the position of the movable member" to be longer than the control cycle of the "ejection control", it is possible to suppress the processing load of the controller 700. Further, by suppressing the processing load, the high priority control such as the "ejection control" can be further speeded up.

### <Injection Control and Monitoring Control of Injection Pressure and Injection Speed>

Next, the injection control and the monitoring controls of the injection pressure and the injection speed will be described.

Here, the injection control is a drive control of the injection motor 350 performed in the filling process and the holding pressure process. More specifically, in the filling process, the drive control of the injection motor 350 is performed, in which the screw 330 is moved forward at a set movement speed, and the cavity space 801 inside the mold unit 800 is filled with the liquid molding material accumulated in front of the screw 330.

Further, the drive control of the injection motor 350 refers to a feedback control of the injection motor 350 which causes a deviation between the detection value of the position or the movement speed of the screw 330 by the injection motor encoder 351 and the predetermined set value to be zero.

Further, the monitoring control of the injection pressure refers to at least one of acquiring the detection value detected by the pressure detector 360 or/and comparing the detection value detected by the pressure detector 360 with the predetermined set value.

Further, the monitoring control of the injection speed refers to at least one of acquiring the detection value detected by the injection motor encoder 351 or/ and comparing the detection value detected by the injection motor encoder 351 with the predetermined set value. Moreover, the injection speed is the movement speed of the screw 330.

In a case where an abnormality in the injection pressure occurs in the injection process (filling process and holding pressure process), it is necessary to perform depressurization or the like as abnormality processing. Therefore, the controller 700 executes the monitoring control of the injection pressure during the filling process, and also executes the monitoring control of the injection speed during the holding pressure process. Then, in a case where the detection value of the injection pressure exceeds the predetermined set value, or in a case where the detection value of the injection speed exceeds the predetermined set value, the controller 700 stops the drive control of the injection motor 350 in a timely manner. Then, after the injection motor 350 is stopped, depressurization or the like can be performed as abnormality processing.

Since the drive control of the injection motor 350 is a precise operation and requires a high response, the drive control can be set to the high priority control having a short control cycle. Meanwhile, the monitoring control of the injection pressure and the monitoring control of the injection speed do not require a high response, and thus, the monitoring controls can be set to the low priority control, and the control cycles of the monitoring controls can be longer than that of the drive control of the injection motor 350.

Here, the section in which the injection control and the monitoring controls of the injection pressure and the injection speed are performed and a control cycle thereof will be described.

In Fig. 11, in the stage (K) immediately below the stage (J), a section of the drive control of the injection motor 350 and a control cycle thereof are shown. The section of the drive control of the injection motor 350 is a section from the start of the filling process to the completion of the holding pressure process, as shown by the vertical bars 111K in Fig. 11. As described above, since the drive control of the injection motor 350 is the high priority control having a short control cycle, a gap between the vertical bars 111K is narrow.

In a section (L) immediately below the stage (K), a section of the monitoring control of the injection pressure and a control cycle thereof are shown. Similar to the mold clamping force monitoring control or the like described above, the acquisition control of the injection pressure and the comparison control of the injection pressure are respectively shown as a breakdown of the monitoring control of the injection pressure.

The section in which the monitoring control of the injection pressure is performed is a section from the start of the filling process to the completion of the filling process, as shown by the vertical bars 111L in Fig. 11.

As described above, the monitoring control of the injection pressure is the low priority control, and thus, the control cycle of the monitoring control is longer than that of the drive control of the injection motor 350. Therefore, in the monitoring control of the injection pressure in the stage (L), a gap between the vertical bars 111L is wider than that of the vertical bars 111K in the drive control of the injection motor 350 in the stage (K).

Further, the comparison control of the injection pressure does not need to be executed using all detection values of the injection pressure acquired by the acquisition control of the injection pressure, and an average value of the plurality of acquired detection values or the like may be compared with the set value. Accordingly, the control cycle of the comparison control of the injection pressure may be longer than the control cycle of the acquisition control of the injection pressure. Therefore, in the comparison control of the injection pressure, the gap between the vertical bars 111L is wider than that in the injection pressure acquisition control. However, the control cycles of the acquisition control of the injection pressure and the comparison control may be the same as each other.

Further, in the stage (M) immediately below the stage (L), the section of the monitoring control of the injection speed and the control cycle thereof are shown. Similar to the monitoring control of the mold clamping force or the like described above, the acquisition control of the injection speed and the comparison control of the injection speed are respectively shown as a breakdown of the monitoring control of the injection speed.

A section in which the monitoring control of the injection speed is performed is a section from the start of the holding pressure process to the completion of the holding pressure process, as shown by the vertical bars 111M in Fig. 11.

As described above, the monitoring control of the injection speed is the low priority control, and thus, the control cycle of the monitoring control is longer than that of the drive control of the injection motor 350. Therefore, in the monitoring control of the injection speed in the stage (M), a gap between the vertical bars 111M is wider than that of the vertical bars 111K in the drive control of the injection motor 350 in the stage (K).

Further, the comparison control of the injection speed does not need to be executed using all the detection values of the injection speed acquired by the acquisition control of the injection speed and an average value of the plurality of acquired detection values or like may be compared with the set value. Accordingly, the control cycle of the comparison control of the injection speed may be longer than the control cycle of the injection speed acquisition control. Therefore, in the comparison control of the injection speed, the gap between the vertical bars 111L is wider than that in the acquisition control of the injection speed. However, the control cycles of the acquisition control and the comparison control of the injection speed may be the same as each other.

In this way, in the injection control and the monitoring controls of the injection pressure and the injection speed, the control cycles of the "the monitoring controls of injection pressure and the injection speed" are longer than the control cycle of the "injection control", and thus, it is possible to suppress the processing load of the controller 700.

Further, by suppressing the processing load, the high priority control such as the "injection control" can be further speeded up.

Hereinbefore, the embodiments, the modification examples, or the like of the injection molding machine are described. However, the present invention is not limited to the above embodiments or the like, and various modifications and improvements are possible within a scope of the present invention described in the Claims.

For example, an injection molding machine includes a toggle mechanism which moves a movable platen forward or rearward, a mold clamping motor which moves a crosshead of the toggle mechanism, and a controller which controls the mold clamping motor, and the controller performs a drive control of the mold clamping motor, a monitoring control of a mold closing time, and sets a cycle of the monitoring control to be longer than a control cycle of the drive control.

Further, an injection molding machine includes a screw which feeds a molding material forward, a plasticizing motor which moves the screw, and a controller which controls the plasticizing motor, and the controller performs a drive control of the plasticizing motor, performs a monitoring control of a plasticizing time, and set a cycle of the monitoring control to be longer than the control cycle of the drive control.

Moreover, an injection molding machine includes an ejector rod which comes into contact with a movable member, an ejector motor which moves the ejector rod, and a controller which controls the ejector motor, and the controller performs a drive control of the ejector motor. , a monitoring control of a position of the movable member, and sets a cycle of the monitoring control to be longer than a control cycle of the drive control.

Further, an injection molding machine includes a screw which feeds a molding material forward, an injection motor which moves the screw, and a controller which controls the injection motor, and the controller performs a drive control of the injection motor, a monitoring control of a pressure of the screw, and sets a cycle of the monitoring control to be longer than a control cycle of the drive control.

Moreover, an injection molding machine includes a screw which feeds a molding material forward, an injection motor which moves the screw, and a controller which controls the injection motor, and the controller performs a drive control of the injection motor, performs a monitoring control of a movement speed of the screw, and sets a cycle of the monitoring control to be longer than a control cycle of the drive control.

By using these injection molding machines, in a drive control of a drive unit which moves a movable unit and in a monitoring control thereof, a control cycle of the monitoring control is set to be longer than a control cycle of the drive control, and thus, it is possible to suppress the processing load of the controller 700. Further, by suppressing the processing load, the high priority control such as the drive control can be further speeded up.

### Reference Signs List

- 10: injection molding machine
- 100: mold clamping unit
- 110: stationary platen
- 120: movable platen
- 130: toggle support
- 140: tie bar
- 141: tie bar strain detector
- 145: multiplexer
- 150: toggle mechanism
- 151: crosshead
- 160: mold clamping motor
- 161: mold clamping motor encoder
- 183: mold space adjustment motor
- 184: mold space adjustment motor encoder
- 700: controller
- 705: timer
- 710: set value acquisition unit
- 711: mold clamping force actual acquisition unit
- 712: mold clamping force correction control unit
- 713: mold closing/pressurizing/clamping/depressurizing/opening process control unit
- 714: crosshead position acquisition unit
- 715: Mold clamping motor control unit
- 716: toggle support position acquisition unit
- 717: mold space adjustment motor control unit
- 718: first prohibition unit
- 719: second prohibition unit
- 720: crosshead arrival detection unit
- 800: mold unit
- 810: stationary mold
- 820: movable mold
- 831: proximity sensor

## Claims

1. An injection molding machine (10) comprising:
a drive unit (160, 183) which is configured to move a movable unit; and
a controller (700) which is configured to control the drive unit (160, 183),
wherein the controller (700) is configured to perform a drive control of the drive unit (160, 183) and a monitoring control, the monitoring control comprising at least one of acquiring a detection value of the mold clamping force or/and comparing the detection value with a predetermined set value, **characterized in that**
a control cycle of the monitoring control is longer than a control cycle of the drive control.

2. The injection molding machine (10) according to claim 1, further comprising:
a toggle mechanism (150) which is configured to move a movable platen (120) forward or rearward; and
a mold clamping motor (160) which is configured to move a crosshead (151) of the toggle mechanism (150),
wherein the controller (700) is configured to perform the drive control of the mold clamping motor (160) and the monitoring control of a mold clamping force.

3. The injection molding machine (10) according to claim 1 or 2, further comprising:
a toggle mechanism (150) which is configured to move a movable platen (120) forward or rearward;
a toggle support (130) which supports the toggle mechanism (150); and
a mold space adjustment motor (183) which is configured to move the toggle support (130),
wherein the controller (700) is configured to perform the drive control of the mold space adjustment motor (183) and the monitoring control of a mold clamping force.

4. The injection molding machine (10) according to claim 2 or 3,
wherein the controller (700) is configured to prohibit the mold clamping force from being used for the monitoring control except during mold clamping.

5. The injection molding machine (10) according to any one of claims 2 to 4, further comprising:
a toggle support (130) which supports the toggle mechanism (150); and
a mold space adjustment motor (183) which is configured to move the toggle support (130),
wherein the controller (700) prohibits the drive control of the mold space adjustment motor (183) during mold clamping.

## Patentansprüche

1. Spritzgießmaschine (10), umfassend:
eine Antriebseinheit (160, 183), die konfiguriert ist, eine bewegliche Einheit zu bewegen; und
eine Steuerung (700), die konfiguriert ist, die Antriebseinheit (160, 183) zu steuern, wobei
die Steuerung (700) konfiguriert ist, eine Antriebssteuerung der Antriebseinheit (160, 183) und eine Überwachungssteuerung durchzuführen, wobei die Überwachungssteuerung wenigstens Erfassen eines Detektionswerts der Formschließ/-klemmkraft oder/und Vergleichen des Detektionswerts mit einem vorbestimmten Sollwert umfasst,
**dadurch gekennzeichnet, dass**
ein Steuerzyklus der Überwachungssteuerung länger ist als ein Steuerzyklus der Antriebssteuerung.

2. Spritzgießmaschine (10) nach Anspruch 1, ferner umfassend:
einen Kniehebelmechanismus (150), der konfiguriert ist, eine bewegliche Platte (120) vorwärts oder rückwärts zu bewegen; und
einen Formschließ-/klemmmotor (160), der konfiguriert ist, einen Kreuzkopf (151) des Kniehebelmechanismus (150) zu bewegen,
wobei die Steuerung (700) konfiguriert ist, die Antriebssteuerung des Formschließ-/klemmmotors (160) und die Überwachungssteuerung einer Formschließ/- klemmkraft durchzuführen.

3. Spritzgießmaschine (10) nach Anspruch 1 oder 2, ferner umfassend:
einen Kniehebelmechanismus (150), der konfiguriert ist, eine bewegliche Platte vorwärts oder rückwärts zu bewegen;
einen Kniehebelträger (130), der den Kniehebelmechanismus (150) trägt; und
einen Formraumanpassungsmotor (183), der konfiguriert ist, den Kniehebelträger (130) zu bewegen,
wobei die Steuerung (700) konfiguriert ist, die Antriebssteuerung des Formraumanpassungsmotors (183) und die Überwachungssteuerung einer Formschließ/- klemmkraft durchzuführen.

4. Spritzgießmaschine (10) nach Anspruch 2 oder 3,
wobei die Steuerung (700) konfiguriert ist zu verhindern, dass die Formschließ/-klemmkraft außer während Formschließen/-klemmen für die Überwachungssteuerung verwendet wird.

5. Spritzgießmaschine (10) nach einem der Ansprüche 2 bis 4, ferner umfassend:
einen Kniehebelträger (130), der den
Kniehebelmechanismus (150) trägt; und
einen Formraumanpassungsmotor (183), der konfiguriert ist, den Kniehebelträger (130) zu bewegen,
wobei die Steuerung (700) die Antriebssteuerung des Formraumanpassungsmotors (183) während Formschließen/- klemmen verhindert.

## Revendications

1. Une machine de moulage par injection (10) comprenant :
une unité d'entraînement (160, 183) qui est configurée pour déplacer une unité mobile ; et
un contrôleur (700) qui est configuré pour contrôler l'unité d'entraînement (160, 183),
dans laquelle le contrôleur (700) est configuré pour exécuter une commande d'entraînement de l'unité d'entraînement (160, 183) et une commande de surveillance, la commande de surveillance comprenant au moins l'une de l'acquisition d'une valeur de détection de la force de serrage de moule et/ou de la comparaison de la valeur de détection avec une valeur définie prédéterminée, **caractérisée en ce que**
un cycle de contrôle de la commande de surveillance est plus long qu'un cycle de contrôle de la commande d'entraînement.

2. La machine de moulage par injection (10) selon la revendication 1, comprenant en outre :
un mécanisme de bascule (150) qui est configuré pour déplacer une platine mobile (120) vers l'avant ou vers l'arrière ; et
un moteur de serrage de moule (160) qui est configuré pour déplacer une crosse (151) du mécanisme de bascule (150),
dans laquelle le contrôleur (700) est configuré pour exécuter la commande d'entraînement du moteur de serrage de moule (160) et la commande de surveillance d'une force de serrage de moule.

3. La machine de moulage par injection (10) selon la revendication 1 ou 2, comprenant en outre :
un mécanisme de bascule (150) qui est configuré pour déplacer une platine mobile (120) vers l'avant ou vers l'arrière ;
un support de bascule (130) qui supporte le mécanisme de bascule (150) ; et
un moteur d'ajustement d'espace de moule (183) qui est configuré pour déplacer le support de bascule (130),
dans lequel le contrôleur (700) est configuré pour exécuter la commande d'entraînement du moteur d'ajustement d'espace de moule (183) et la commande de surveillance d'une force de serrage de moule.

4. La machine de moulage par injection (10) selon la revendication 2 ou 3,
dans lequel le contrôleur (700) est configuré pour empêcher la force de serrage de moule d'être utilisée pour la commande de surveillance, excepté pendant le serrage de moule.

5. La machine de moulage par injection (10) selon l'une quelconque des revendications 2 à 4, comprenant en outre :
un support de bascule (130) qui supporte le mécanisme de bascule (150) ; et
un moteur d'ajustement d'espace de moule (183) qui est configuré pour déplacer le support de bascule (130),
dans laquelle le contrôleur (700) empêche la commande d'entraînement du moteur d'ajustement d'espace de moule (183) pendant le serrage de moule.
